# EUROPEAN PATENT APPLICATION

(11) **EP 1 000 956 A1**
(43) Date of publication of application: **17.05.2000**
(21) Application number: 99122023.7
(22) Date of filing: 12.11.1999
(51) Int. Cl.: C08G 18/42

(54) **Aromatic polyester polyols composition and process**

(30) Priority: 12.11.1998 US 190781
(71) Applicant: Oxid, L.P., Houston, Texas 77012 (US)
(72) Inventor: Shieh, David J., Sugarland, Texas 77479 (US); Deleon, Alberto, Kingwood, Texas 77345 (US)
(74) Representative: Dost, Wolfgang, Dr.rer.nat., Dipl.-Chem.

(57) **Abstract**

A process of manufacturing a new composition of a polyester polyol from polyalkylene terephthalate and a polyol, suitable for use in a one-component or "pre-polymer" foam formulation, has been developed. The polyester polyol has been treated to reduce the content of antimony contained therein. Preferably the polyester polyol is the reaction product of polyethylene terephthalate and one or more high molecular weight glycols selected from a group consisting of triethylene glycol, tetraethylene glycol, pentaethylene glycol, and hexaethylene glycol. Such a polyester polyol having reduced antimony content develops a low exotherm when mixed with an isocyanate. The addition of acid to increase the acid number of the polyol further reduces the exotherm when mixed with an isocyanate. The lower exotherm facilitates use of the polyester polyester polyol in one-component and prepolymer formulations.

## Description

### FIELD OF THE INVENTION

The invention relates generally to a polyester polyol prepared by transesterifying polyethylene terephthalate with high molecular weight aliphatic diols. The formed aromatic polyester polyols are useful in making and one-component foam compositions.

### BACKGROUND OF THE INVENTION

Polyurethane foams are formed by reaction between an isocyanate and a polyol having at least two hydroxyl groups with a suitable blowing agent, surfactant and catalyst.

In a one component foam system, the polyol, the isocyanate, catalyst, surfactants, and blowing agents are mixed together in a closed container. An exotherm develops. This exotherm may increase the temperature and pressure of the one-component foam composition to the point where the chemicals degrade, boil over, or where containing equipment fails.

Historically, polyether polyols made by the addition reaction of alkylene oxides to such initiators as sucrose, glycerin, triethanol amine, and the like, have been used in this application. Propylene oxide is preferred to ethylene oxide as the former yields polyether polyols with secondary hydroxyl groups. Historically, primary containing hydroxyl groups compounds, whether polyether or polyesters, are avoided in one component foam applications because they tend to yield rapid temperature increase and high maximum exotherm.

The prior art addressed this problem by adding the components gradually over time, or using active cooling of the composition. The rate of addition of components, cooling, and mixing were controlled to keep the temperature of the composition below about 80°C to about 90°C. Mixing could take from as little as 15 minutes to several hours. This time-consuming and potentially dangerous activity is a hindrance to the use of polyester polyol in the industry.

### SUMMARY OF THE INVENTION

A process of manufacturing a new composition of a polyester polyol from polyalkylene terephthalate and a polyol, suitable for use in a one-component foam formulation as well as for more conventional foam formulations, has been developed.

The process involves mixing polyalkylene terephthalate with one or more polyols, e.g. diols or triols to form a fluid composition. The fluid composition is treated to reduce the content of antimony contained therein. The fluid composition is reacted, by heating the composition to a temperature sufficient to sustain a transesterification reaction in the presence of a catalyst, to form a polyester polyol. The polyester polyol so treated contains less than about 300, preferably less than about 200, more preferably less than about 100, even more preferably less than about 50, and most preferably less than about 25 parts per million by weight (ppm) antimony. The fluid composition is then digested to form the polyester polyol. Applicants have discovered that a polyester polyol so manufactured forms a substantially reduced exotherm when mixed with isocyanate or polyisocyanate.

Applicants also discovered that the exotherm is further reduced if certain lower molecular weight polyols (i.e. less than about 120 mw), such as ethylene glycol, propylene glycol, and diethylene glycol, are not used in manufacturing the formulation of the polyester polyol. Preferably the polyol is one or more high molecular weight glycols such as triethylene glycol, tetraethylene glycol, pentaethylene glycol, or hexaethylene glycol. Triols and other higher polyfunctional alcohols can also be used.

Furthermore, applicants have discovered that the reaction of the polyester polyol with alkylene oxides further reduces the resulting isotherm that occurs when the polyester polyol is subsequently mixed with the isocyanate or polyisocyanate.

Furthermore, applicants have discovered that by raising the acid number of the polyol of the invention, the maximum exotherm and the rate of temperature increase are further reduced.

### BRIEF DESCRIPTION OF THE DRAWINGS

Figure 1 is a graphical representation of the results of four experiments that show the effect of antimony concentration on the exotherm and the rate of temperature increase for various polyols mixed with an equal molar quantity of polyisocyanate.
Figure 2 is a graphic representation of the maximum exotherm and rate of temperature rise for two polyols made by the process of the present invention.
Figure 3 is a graphic representation of the two exotherms which develop when two polyols are mixed with an equal molar quantity of polyisocyanate, wherein one polyol contains only primary hydroxyl groups and wherein the second polyol contains only secondary hydroxyl groups.
Figure 4 is a graphic representation of the two exotherms which develop when two polyols are mixed with an equal molar quantity of polyisocyanate, wherein both polyols have had acid added to reach an acid number of 3, and wherein one polyol has only primary hydroxyl groups and wherein the second polyol contains only secondary hydroxyl groups.
Figure 5 is a graphic representation of the two exotherms which develop when two polyols with only primary hydroxyl groups are mixed with an equal molar quantity of polyisocyanate, wherein has an acid number of 0.9 and the second polyol has an acid number of 3.

### DETAILED DESCRIPTION OF THE INVENTION

A method of manufacturing a new composition of a polyester polyol from polyalkylene terephthalate and a polyol, suitable for use in a one-component foam formulation or in other foam formulations, has been developed. Aromatic polyester polyols useful for the production of polyurethane and polyisocyanurate foams can be derived from polyalkylene terephthalate polymers, such as polyethylene terephthalate, by digestion of the polymer with various polyols, such as polyhydric alcohols, ethers, and mixed ether-ester polyols. Preferably the polyalkylene terephthalate is polyethylene terephthalate. On mixing the polyester polyol with isocyanate or polyisocyanate and, optionally, other ingredients such as surfactants and propellants, an isotherm develops.

This exotherm is detrimental to the use of polyester polyol in one component foam. The most immediate concern is that the exotherm may generate high pressure such that the containing vessel will fail. Other substantial concerns include degradation of foam components due to high temperatures that are developed, the possibility of the composition boiling over, and the danger to personnel from incidental burns. Prior art partially addressed this problem with passive cooling, i.e., by mixing the components over a long period of time, or with active cooling, or by using polyols containing secondary hydroxyl groups. See, for example, U.S. Patent Number 5,530,154, the disclosure of which is incorporated herein by reference.

Applicants have developed a polyester polyol that forms a substantially reduced exotherm when mixed with isocyanate or polyisocyanate. Without being bound to any theory, applicants believe that antimony, a catalyst used in the manufacture of polyalkylene terephthalate polymers and a metal nearly always found in said polymers, acts as a catalyst to promote the exotherm. By reducing the quantity of antimony, and other metals including sodium and potassium, the exotherm is reduced.

The polyol of the present invention is manufactured by mixing polyalkylene terephthalate with one or more polyols to form a composition, treating the composition to reduce the content of antimony, and reacting the composition to form a polyester polyol.

The polyalkylene terephthalate polymers may be obtained from a variety of sources. Advantageous sources are from recycled materials, such as used photographic films, X-ray films, and the like; synthetic fibers and industrial recycled materials generated during their manufacture; recycled plastic bottles and containers such as the soft plastic beverage containers now widely used by the soft drink industry; and recycled materials from the production of other products made from polyalkylene terephthalate polymers. See U.S. Patent Number 5,360,900, the specification of which is incorporated herein by reference.

This polyalkylene terephthalate is often polyethylene terephthalate, but may also be polypropylene terephthalate, terephthalates that are substituted with methyl groups, such as dimethyl terephthalate or terephthalic acid, phthalic anhydride, and the like, or mixtures thereof. These starting materials produce aromatic polyester polyols, in that the resulting polyester polyol has one or more benzene moieties. The weight percent of benzene ring moieties in the polyester polyol is preferably greater than about 10 weight percent, more preferably greater than about 18 weight percent. An aromatic polyester polyol produces a foam that has desirable fire resistance properties.

The use of aromatic polyester polyols obtained from polyalkylene terephthalate polymers for the preparation of polyurethanes and polyisocyanurates has a number of advantages. First, the source of the polyalkylene terephthalate polymers can be obtained from post-consumer recycled and industrial recycled materials. A second advantage is found in the improved fire resistance of the polyurethane and polyisocyanurate foams prepared from polyalkylene terephthalate based polyester polyols in comparison to those prepared from other polyols such as polyethers.

Suitable polyols that are mixed with and then reacted with the polyalkylene terephthalate polymers will typically be diols or higher multifunctional alcohols. Suitable diols can include ethylene glycol, diethylene glycol, propylene glycol, butylene glycol, and the like. However, applicants have found that polyester polyols made with high molecular weight aliphatic diols, for example, triethylene glycol, tetraethylene glycol, pentaethylene glycol, and hexaethylene glycol, reduce the exotherm that develops when they react with isocyanates as compared to polyols manufactured with certain lower molecular weight polyols (i.e. less than about 120 mw), such as ethylene glycol, propylene glycol, and diethylene glycol.

Without being bound to any theory, it is believed that the lower molecular weight glycols are undesired reactive elements that cause at least part of the exotherm problem.

Therefore a preferred polyester polyol composition is formulated from higher molecular weight polyols, and contains little ethylene glycol or diethylene glycol, which if present could prematurely and exothermically react with other components of a one-component foam formulation. By little it is meant that the original polyol mixture contain 5% or less, preferably 1% or less, and more preferably 0.5% or less by weight total of free ethylene glycol, diethylene glycol, and propylene glycol. It is preferred that ethylene glycol formed during the digestion be removed from the composition.

The process of the present invention to form polyester polyols will normally be carried out with recycled polyalkylene terephthalate polymers, typically polyethylene terephthalate polymers in the form of used photographic film, used soda bottles, and the like. When using such recycled materials, it is usually necessary to first clean the materials to remove dirt, oil, debris, labels, and the like. In the case of photographic films, it may be necessary to remove the emulsion layer and substratum from the film prior to digestion.

The digesting polyol is usually added to a vessel and heated prior to the addition of the polyalkylene terephthalate. The chopped polyalkylene terephthalate polymers is then added to the vessel to be digested by the polyol. The mixture is heated and agitated until it becomes fluid-like composition. The digesting polyol and polyalkylene terephthalate polymer are added at about a 1:1 molar ratio. Conveniently, the vessel is an agitated pressure vessel having means for collecting the overhead vapors. The volume of the reactor is not critical, with commercial reactors typically being 4,000 gallons or larger.

At this point, after mixing, the composition is advantageously treated to remove metals, particularly antimony. The preferred treatment process involves mixing phosphoric acid to the composition, and then filtering the composition. The quantity of phosphoric acid mixed into the composition is about 0.0005% to about 4%, preferably between about 0.004% to about 0.4% by weight of the composition. Filtering removes solids and wetting liquids, if any. It is advantageous to heat the composition to between about 100° C and about 160° C prior to filtering.

Other techniques to remove metals from the composition, such as acid addition followed by centrifugation of the composition, are known to the art. The method of removing the metals is not important. Process variables, including the quantity of acid added, the type and efficiency of solids and liquid removal, the time allowed for reaction prior to filtration, and the number of metal removal treatments performed affect the quantity of metals remaining after treatment.

Untreated compositions typically contain between about 400 and 6000 ppm antimony. The composition, and of course the resulting polyol, treated by the process of this invention contains less than 300 ppm, preferably less than 200 ppm, more preferably less than 100 ppm, even more preferably less than 50 ppm, and most preferably less than 25 ppm antimony. It is possible to reduce the antimony content to below about 15 ppm.

The process of removing antimony from the composition has the added benefit of removing other metals. Other metals may also catalyze the reaction forming the unwanted exotherm. In a preferred embodiment the sodium content of the polyol is reduced to below about 200 ppm, and more preferably below about 150 ppm. The potassium content of the composition is also reduced.

The composition is then advantageously reacted by digestion to form the polyester. The digestion process can occur before treating the composition to remove antimony.

This digestion reaction is also referred to as transesterification. The polyols, such as the glycols mentioned above, are reacted with polyalkylene terephthalate by heating the composition to a temperature where digestion occurs, preferably in the presence of a catalyst such as a titanate catalyst. In carrying out the transesterification step, the reaction temperature is not critical, with temperatures usually between 100° to 250° C, typically above about 140° C, more typically above about 180° C.

Ethylene glycol and diethylene glycol are beneficially removed. Nitrogen sparging, vacuum distillation, or both may be carried out during the digestion to remove water and preferably to remove low molecular weight glycols such as ethylene glycol. A reflux system may be used to condense and return the higher molecular weight digesting polyol to the system. The digestion is typically carried out under a vacuum of from about four to five inches of mercury. Preferably, the refluxing system will not return ethylene glycol or diethylene glycol to the system.

The mixing and digestion/transesterification steps are not critical, and are well known to the art. See, for instance, the procedure described in U.S. patent Number 4,636,530, Number 4,701,477 and Number 4,500,656, the entire specifications of which are incorporated herein by reference. The transesterification reaction is endothermic and heat must be added during the course of the reaction. The digestion takes a number of hours. A suitable catalyst, such as a titanium catalyst, is added. At the end of the reaction, the temperature of the mixtures is increased, typically to above 200° C over the last one to two hours. When the reaction appears to be complete, the product can be tested to see if the expected hydroxyl number is present.

Applicants have discovered that by raising the acid number of the polyol of the invention, the maximum exotherm and the rate of temperature increase on mixing with isocyanate are reduced. Any acid is suitable. Preferably, phosphoric, 2-ethylhexoic, butyl acid phosphate, terephthalic acid, isophthalic acid, and the like can be used. Most preferably, butyl acid phosphate is the acid of choice. The acid number increase of between 1 and 5 is preferred, while an increase from about 1-3 is more preferred. The acid, preferably butyl acid phosphate, is added until the finished polyol has an acid number of greater than 1, preferably between about 2 to 4, more preferably between about 2 to 3. The increase in acid number lowers the rate of development of an isotherm in both primary and secondary hydroxyl containing polyols.

Applicants have discovered that the reaction of the polyester polyol with alkylene oxides further reduces the resulting isotherm that occurs when the polyester polyol is subsequently mixed with the isocyanate or polyisocyanate. After the formation of polyester polyols, it is often beneficial to further process the polyester polyol by reacting the polyester polyol with alkylene oxides to introduce ether formation functionalities onto the terminal ester linkages of the digestion product. This will further ensure that the presence of ethylene glycol or diethylene glycol is kept to a minimum as the alkyloxylation reaction also converts these low molecular weight glycols into higher molecular weight glycols.

Suitable alkylene oxides include ethylene oxide, propylene oxide, butylene oxide, isobutylene oxide, N-hexyl oxide, styrene oxide, trimethylene oxide, tetrahydrofuran, epichlorohydrin, and the like. Preferably propylene oxide will be employed.

The polyol/polyalkylene terephthalate polyester is then preferably reacted with from about 1.0 to about 20 equivalents of the alkylene oxide for each equivalent of the polyalkylene terephthalate initially digested. The reaction between the alkylene oxide and the digestion product is exothermic, and the addition of the alkylene oxide should be done gradually so that the temperature in the reaction vessel does not exceed about 180° C, preferably being maintained between 160° and 165° C.

The addition of the alkylene oxide is believed to form ether linkages on the free hydroxyl groups present on the digested ester molecules. This will ensure that the low molecular weight glycols such as ethylene glycol and diethylene glycol are converted to higher molecular weight species.

The extraction of antimony can be done at any point in this process. Metals can be extracted from the finished polyester polyol or from the digested material prior to transesterification. However, it is advantageous to extract metals from the composition before transesterification because the viscosity of the fluid composition is lower than the viscosity of the polyester polyol, and at this point the material is at its lowest costs.

One embodiment of this invention are aromatic polyester polyols suitable for use as a polyol reagent one-component foam formulations are prepared by (1) forming a fluid composition of polyalkylene terephthalates with a polyol; (2) treating the dissolved polyalkylene terephthalate composition to reduce the quantity of metals, particularly antimony present; (3) transesterifying the composition to form a polyester polyol, and optionally, (4) reacting the digestion product with an alkylene oxide.

In some embodiments of the invention, the hydroxyl number may be between about 100 to about 200. The viscosity of the polyester polyol may range from about 2000 to about 5000 centipoise (cps) at 25° C. The acid number of the polyester polyol is often less than 2, more often less than 1. It is advantageous to add acid to increase the acid number of the polyester polyol to between about 1.5 to about 4, preferably to between about 2 and about 3.

The polyester polyol can be used to form foam in a conventional manner, wherein the polyester polyol is reacted with a suitable amount of a polyisocyanate in the presence of an appropriate blowing agent, catalyst and surfactant.

The polyester polyols can also be mixed with a isocyanate in the absence of a catalyst, blowing agent and surfactant in order to form a pre-polymer which could subsequently be cross-linked to form the polyurethane foam. This is a typical pre-polymer. The polyester polyol of this invention so mixed will form a smaller exotherm than conventionally produced polyester polyols. The pre-polymers just described may be employed to produce polyurethane and polyisocyanurate foams or solid urethanes in the conventional manner.

The type of isocyanate used is not important. Several polyisocyanates, i.e., diphenylmethane diisocyanate, 2,4- and 2,6-toluene diisocyanates, and polymethylene-polyphenylenepolyisocyanates, are known to the art. The terms isocyanate, polymeric isocyanate, and polyisocyanate are used interchangeably in this application. Those skilled in the art are aware of properties that various isocyanates can add to a foam. For example, U.S. Patent Number 4,636,530 discusses several polymeric isocyanates, and this disclosure is incorporated herein by reference.

Preferably, the blowing agent is either water, a halogenated hydrocarbon, carbon dioxide or formic acid, or combinations thereof. The surfactant is usually a silicone surfactant. The catalyst is any one of many conventional polyurethane catalysts, such as an amine or an organometallic catalyst. The ingredients are mixed together and allowed to cure, either in a mold or by free rise processes. Water from the air may aid in curing the foam. Such processes are well known in the art and need not be further described.

The polyester polyol so produced in accordance with this invention is also particularly well suited for use in one-component foam formulations. A one-component foam formulation, in parts by weight (pbw), has the general formula:

| | |
|---|---|
| Polyester Polyol | 100 pbw |
| Diluents (e.g. tri-chloro isopropyl phosphate chorinated parafins, etc) | 50 pbw |
| Silicone surfactant | 1.5 pbw |
| Catalyst | 1.5 pbw |
| Polymeric isocyanate | 250 pbw |
| Propellant/Blowing agent | 20-25% |

All of these ingredients are mixed in a suitable container, for example a metal can. The can is sealed and the propellant injected. The contents are agitated vigorously. The maximum exotherm reached for one component foam formulations of this invention, i.e., those compositions with low levels of antimony present, is below the explosion limits of the cans.

The polyester polyol described herein can be advantageously combined with other polyols, including for some applications polyether polyols. The aromatic polyester polyols make foam that has improved fire resistance over foams made from other polyols.

### EXAMPLE 1

Polyethylene terephthalate foam any of several sources, i.e., post-consumer recycled polyethylene terephthalate from recycled film, bottles or industrial recycled polyethylene terephthalate, is mixed with a glycol mixture containing one or more of triethylene, tetraethylene, pentaethylene, and hexaethylene glycols. The composition is heated to about 150° C.

To this, phosphoric acid is added. Then amount of phosphoric acid is advantageously proportional to the amount of antimony present in the mixture. The amount of phosphoric acid ranges from about 0.01 to about 0.4 weight percent of the composition. This material is then filtered through a filter press.

The reduction in antimony content is from about 400 to 6000 ppm by weight in the untreated composition, before the addition of phosphoric acid, to less than about 200 ppm, preferably less than about 100 ppm, more preferably less than about 50 ppm, and most preferably less than about 25 ppm after filtering. The reduction in sodium content is from about 500 to 1500 ppm by weight in the untreated composition to less than about 150 ppm. The reduction in potassium content is from about 50 to 100 ppm by weight in the untreated composition to less than about 10 ppm, preferably less than about 5 ppm.

The composition is transferred to a reaction vessel attached to a distillation column where a transesterification reaction takes place in the presence of a titanium catalyst. Ethylene glycol is removed and the resulting polyol appears clear. The polyester polyol has an hydroxyl number of between about 100 to 300, preferably between about 150 to about 250. The viscosity of the polyol is between about 1500 cps and about 5000 cps at 25° C, and is preferably between about 2500 cps and about 4500 cps at 25° C.

Butyl acid phosphate is added until the acid number reaches between about 2 and about 3.

The finished polyol has a slow temperature rise when mixed with polymeric isocyanate. The aromatic content of the polyol, defined as the weight percent of benzene ring moieties in the finished polyol, is between about 18 to about 22 percent.

### EXAMPLE 2

A polyester polyol was manufactured following the procedure in Example 1. The material charged into a reactor is presented in Table 1.

**Table 1**

| Initial Charge to reactor to Manufacture Polyester Polyol | | |
|---|---|---|
| Ingredient | Pounds | Weight % |
| Recycled polyethylene terephthalate: | 37560 Lbs. | 39.9 |
| Diethylene Glycol | 18500 Lbs. | 19.6 |
| Triethylene Glycol | 4204 Lbs. | 4.46 |
| Tetraethylene Glycol | 21731 Lbs. | 23.1 |
| Pentaethylene Glycol | 11800 Lbs. | 12.5 |
| Hexaethylene Glycol | 370 Lbs. | 0.4 |
| Tyzor* Catalyst | 10 Lbs. | 0.011 |
| 75% Phosphoric acid | 40 Lbs. | 0.042 |
| Tyzor is a trade name for a titanate catalyst available from DuPont. | | |

This mixture was forced through a filter press. During the subsequent transesterification, a total of 11,200 pounds of ethylene glycol was removed as vapor. In addition, about 2,800 pounds of diethylene glycol was removed as vapor.

The metal content of the composition before treatment with phosphoric acid was 514 ppm by weight antimony, 520 ppm by weight sodium, and 50 ppm by weight potassium. The metal content of the composition after filtering was 27 ppm by weight antimony, 42 ppm by weight sodium, and 0 ppm by weight potassium. The amount of free ethylene and diethylene glycols were < 1.0%.

### EXAMPLE 3

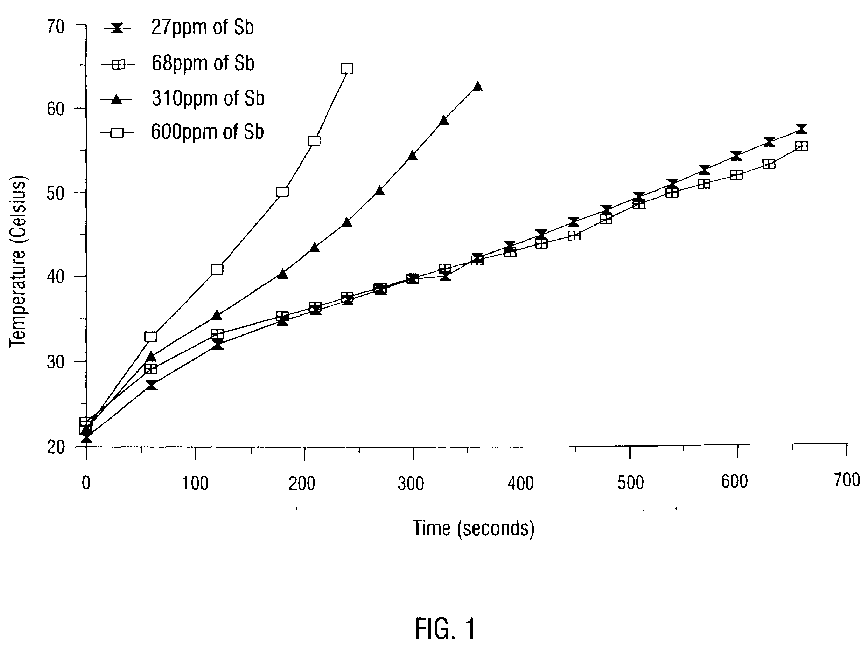

Polyols were manufactured according to the prior art practice and according to the process of this invention. The isotherm was determined in gel cup temperature tests. These tests were conducted by mixing one equivalent of the polyol with one equivalent of polymeric isocyanate such as ICI's Rubinate M. A thermocouple was inserted in the mixture and attached to a recorder. Figure 1 is a graphical representation of the results of numerous experiments regarding the effect of antimony level on the exotherm and the rate of temperature increase for various polyols. The polyols containing low levels of antimony yield lowest exotherm and rate of temperature rise. Those polyols with only 27 and 68 ppm antimony showed a slowly developing exotherm that did not reach 70° C.

### EXAMPLE 4

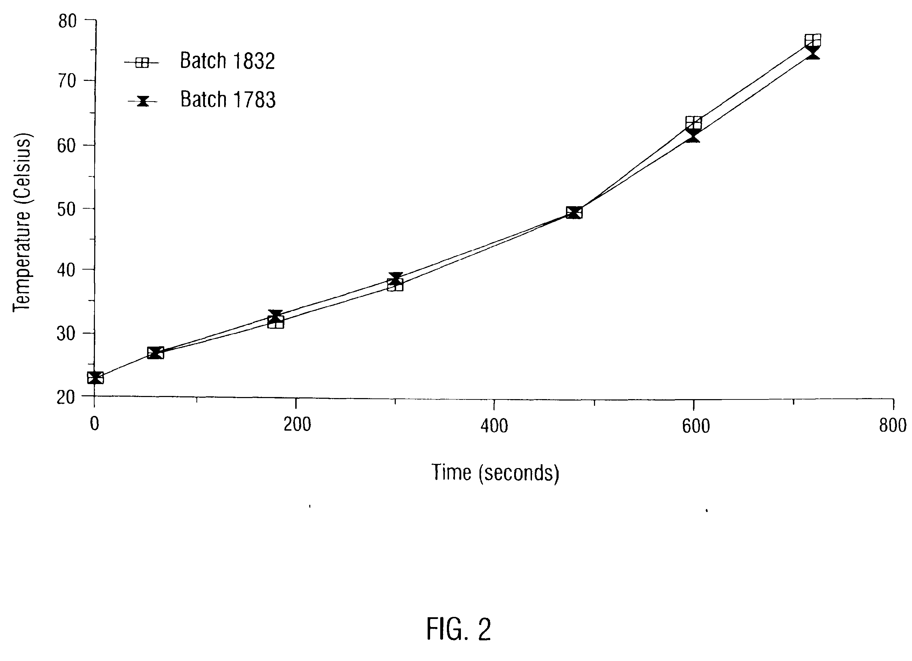

Two polyols made by the process of the present invention were mixed with an equimolar quantity of isocyanate. The two polyols had the same antimony concentration. Figure 2 is a graphic representation of the maximum exotherm and rate of temperature rise for the two polyols. A thermocouple was inserted in the mixture and attached to a recorder. The data shows the reproducibility of the process.

### EXAMPLE 5

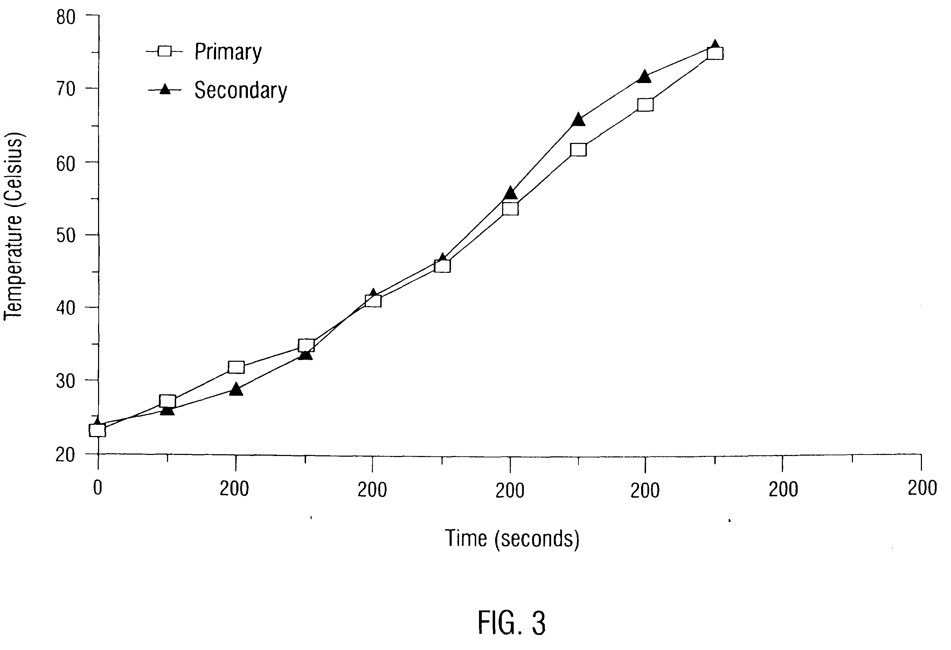

Figure 3 is a graphic representation which shows the exotherms developed by a polyol that contains all primary hydroxyl groups versus a second polyol that contains all secondary hydroxyl groups. The polyol with secondary hydroxyl groups was treated with an alkylene oxide. Both polyols had a low acid number, i.e., less than 1.0. This test is conducted by mixing one equivalent of each polyol with one equivalent of polymeric isocyanate. A thermocouple was inserted in the mixture and attached to a recorder.

### EXAMPLE 6

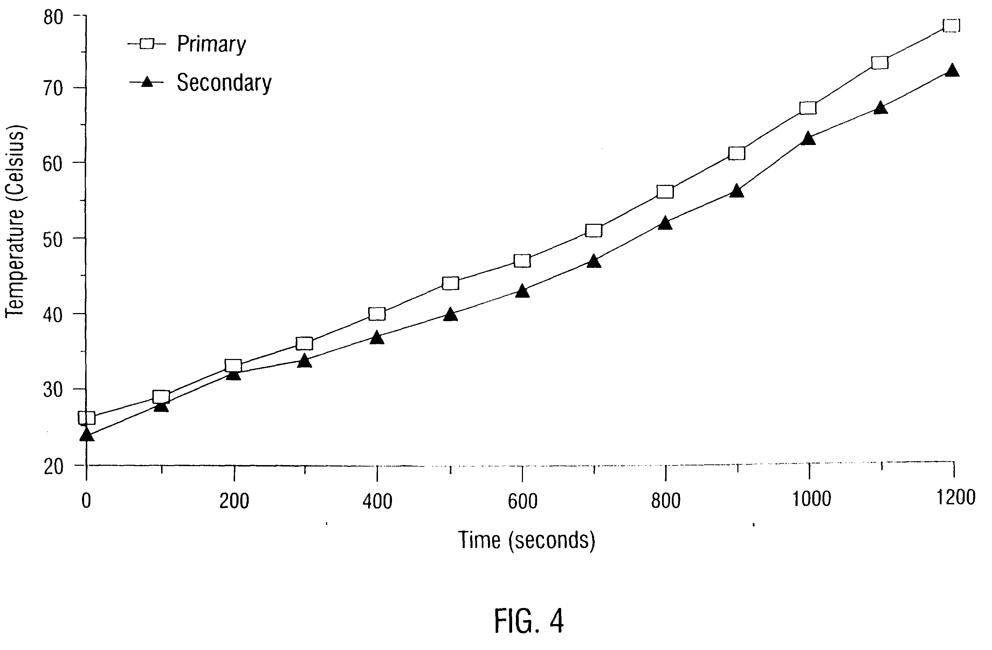

The polyols of Example 5 were treated with acid to get the acid number to about 3. This test was conducted by mixing one equivalent of each polyol with one equivalent of polymeric isocyanate. A thermocouple was inserted in the mixture and attached to a recorder. Figure 4 is a graphic representation which shows the exotherm data for these polyols. Secondary hydroxyl groups give less of an exotherm than do primary hydroxyl groups.

### EXAMPLE 7

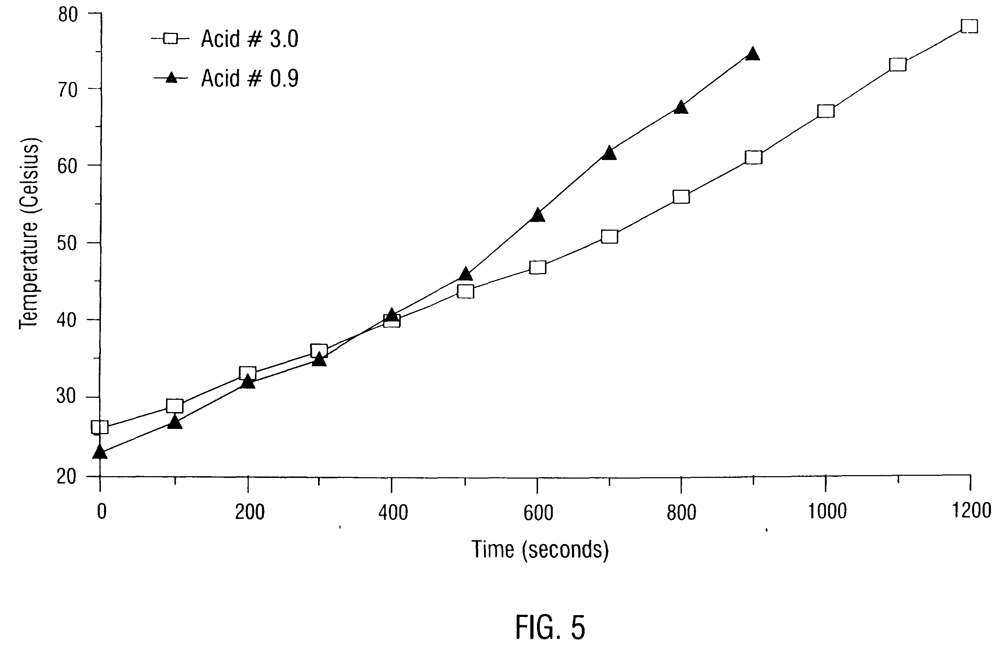

A polyol with all primary hydroxyl groups was split and a fraction treated with acid to get the acid number to 3. This test is conducted by mixing one equivalent of each polyol with one equivalent of polymeric isocyanate. A thermocouple was inserted in the mixture and attached to a recorder. Figure 5 is a graphic representation which shows the isotherm that developed on mixing an all primary hydroxyl containing polyol, with and without acid addition, with polyisocyanate. The addition of acid reduces the rate of temperature rise and the maximum exotherm.

## Claims

1. A process of forming a polyester polyol from antimony containing polyalkylene terephthalate and a polyol, said process comprising
mixing polyalkylene terephthalate with at least one polyol to form a composition;
treating the composition to reduce the content of antimony; and
reacting the composition to form a polyester polyol.

2. The process of claim 1 wherein the polyol comprises at least one glycol, preferably ethylene glycol, diethylene glycol, triethylene glycol, tetraethylene glycol, pentaethylene glycol, hexaethylene glycol, or mixtures thereof, most preferably wherein the polyol contains less than about 1 weight percent total of free ethylene glycol and diethylene glycol.

3. The process of claim 1 or 2 wherein the polyalkylene terephthalate comprises polyethylene terephthalate, dimethyl terephthalate, terephthalic acid, phthalic anhydride, or mixtures thereof, in particular wherein the polyalkylene terephthalate comprises polyethylene terephthalate.

4. The process of any of claims 1 to 3 wherein the treatment to reduce the content of antimony comprises
mixing phosphoric acid into the composition; and
filtering the composition.

5. The process of claim 4 wherein the quentity of phosphoric acid mixed is about 0.0005% to about 4% by weight of the composition, in particular about 0.004% to about 0.4% by weight of the composition.

6. The process of claim 4 or 5 wherein before filtering the composition is heated to a temperature between about 100°C and about 160°C.

7. The process of any of claims 1 to 3 wherein the treatment to reduce the content of antimony comprises
mixing phosphoric acid into the composition; and
centrifuging the composition.

8. The process of any of the preceding claims wherein the antimony content of the polyester polyol is reduced to below about 200 ppm, in particular to below about 100 ppm, preferably to below about 50 ppm, most preferably to below about 25 ppm.

9. The process of any of the preceding claims wherein the sodium content of the polyester polyol is reduced to below about 150 ppm, and the potassium content is reduced to below about 5 ppm.

10. The process of any of the preceding claims further comprising adding butyl acid phosphate, wherein the polyester polyol is characterized by an acid number between about 2 and about 3, the sodium content of the polyester polyol is below about 150 ppm, the potassium content is below about 5 ppm, the hydroxyl number is between about 100 and about 300, in particular between about 150 and about 250, the viscosity of the polyester polyol is between about 1500 to about 5000 centipoise at 25°C, in particular between about 2500 to about 4500 centipoise at 25°C, and the polyester polyol contains less than about 1 weight percent total ethylene and diethylene glycol.

11. The process of any of the preceding claims further comprising reacting the polyester polyol with an alkylene oxide, preferably wherein the alkylene oxide comprises ethylene oxide, propylene oxide, butylene oxide, isobutylene oxide, N-hexyl oxide, styrene oxide, trimethylene oxide, tetrahydrofuran, epichlorohydrin ethylene oxide, or mixtures thereof, most preferably wherein the alkylene oxide comprises propylene oxide.

12. The process of any of the preceding claims further comprising adding acid to the polyester polyol such that the acid number is between about 1 and about 5, in particular between about 2 and about 3.

13. The process of claim 12 wherein the acid comprises phosphoric acid, 2-ethylhexoic acid, butyl acid phosphate, terephthalic acid, isophthalic acid, or mixtures thereof, in particular butyl acid phosphate.

14. A polyester polyol composition comprising a reaction product of polyalkylene terephthalate and one or more polyols, said composition having less than about 200 ppm antimony, in particular less than about 100 ppm antimony, preferably less than about 50 ppm antimony, most preferably less than about 30 ppm antimony.

15. The polyester polyol composition of claim 14, said composition characterized by having an hydroxyl number between about 100 and about 200, a viscosity of about 2000 to about 5000 centipoise at 25°C, containing less than about 1 weight percent total ethylene and diethylene glycol.

16. The polyester polyol composition of claim 14 or 15, said composition characterized by an aromatic content of at least about 18 weight percent benzene moieties in the composition, in particular by an aromatic content of between about 18 and about 22 weight percent benzene moieties in the composition.

17. The polyester polyol composition of any of claims 14 to 16, said composition characterized by an acid number of between about 2 and about 3.

18. The polyester polyol composition of any of claims 14 to 17, said composition characterized by an hydroxyl number of between about 100 and about 300.

19. The polyester polyol composition of any of claims 14 to 18, said composition characterized by a viscosity of between about 1500 and about 5000 centipoise at 25°C, in particular between about 2500 and about 4500 centipoise at 25°C.

20. The polyester polyol composition of any of claims 14 to 19, wherein the polyester polyol was reacted with an alkylene oxide.

21. A process for forming a pre-polymer comprising
providing a polyester polyol composition comprising a reaction product of polyalkylene terephthalate and one or more polyols, and having less than about 200 ppm antimony, in particular less than about 100 ppm antimony; and
mixing the polyester polyol composition with an isocyanate.

22. A process for forming a one component foam comprising
providing a polyester polyol composition comprising a reaction product of polyalkylene terephthalate and one or more polyols, and having less than about 200 ppm antimony, in particular less than about 100 ppm antimony; and
mixing the polyester polyol composition with an isocyanate, a surfactant, a catalyst, and a propellant.
